# EUROPÄISCHE PATENTSCHRIFT

(11) **EP 1 418 729 B1**
(45) Veröffentlichungstag und Bekanntmachung des Hinweises auf die Patenterteilung: **15.04.2015**
(21) Anmeldenummer: 03102571.1
(22) Anmeldetag: 18.08.2003
(51) Int. Cl.: H04L 29/06, H04M 7/00

(54) **Verfahren und Anordnungen zur Kommunikation zwischen einem leitungsvermittelten Kommunikationsnetz und mehreren VoIP-Netzwerkdomänen**
Method and arrangement of communicating between a connection-oriented communications network and several VoIP network domains
Procédé et ensemble permettant de communiquer entre un réseau orienté à connexion et plusieurs domaines de réseaux VoIP

(30) Priorität: 05.09.2002 DE 10241202
(43) Veröffentlichungstag der Anmeldung: 12.05.2004
(73) Patentinhaber: Unify GmbH & Co. KG, 81379 München (DE)
(72) Erfinder: Klaghofer, Karl, 81373, München (DE)
(74) Vertreter: Fritzsche, Thomas

(56) Entgegenhaltungen:
- WO-A-99/14932
- TOGA J ET AL: "ITU-T standardization activities for interactive multimedia communications on packet-based networks: H.323 and related recommendations" COMPUTER NETWORKS, ELSEVIER SCIENCE PUBLISHERS B.V., AMSTERDAM, NL, Bd. 31, Nr. 3, 11. Februar 1999 (1999-02-11), Seiten 205-223, XP004304599 ISSN: 1389-1286
- "Telecommunications and Internet Protocol Harmonization Over Networks (TIPHON); Signalling for basic calls and inter domain calls, between an H.323 Terminal and a Terminal in a Switched-Circuit Network (SCN) Phase II: Scenario 1 + Scenario 2; TS 101 322" ETSI STANDARDS, EUROPEAN TELECOMMUNICATIONS STANDARDS INSTITUTE, SOPHIA-ANTIPO, FR, Bd. TIPHON-3, Nr. V100, Juli 1999 (1999-07), XP014006046 ISSN: 0000-0001

## Beschreibung

In zeitgemäßen Kommunikationssystemen werden Kommunikationsverbindungen, insbesondere Echtzeitverbindungen, z.B. zur Sprach-, Video- und/oder Multimedia-Kommunikation, in zunehmendem Maße auch über paketorientierte Kommunikationsnetze, wie z.B. lokale Netze (Local Area Networks) oder Weitverkehrsnetze (Wide Area Networks) geführt. Auf dieser Technik basiert beispielsweise die sog. Internet-Telefonie, die häufig auch als VoIP-Telefonie (VoIP: Voice over Internet Protocol) bezeichnet wird.

Derartige paketorientierte Kommunikationsnetze sind häufig über Gatewayeinrichtungen an herkömmliche leitungsvermittelte Kommunikationsnetze, wie beispielsweise öffentliche oder private ISDN-Netze (ISDN: Integrated Services Digital Network) angekoppelt, um netzübergreifende Verbindungen zu realisieren. Durch eine solche, zwischen einem paketorientierten und einem leitungsvermittelten Kommunikationsnetz angeordnete Gatewayeinrichtung können Kommunikationsverbindungen vom leitungsvermittelten in das paketorientierte Kommunikationsnetz sowie in umgekehrter Richtung geleitet werden. Die Gatewayeinrichtung führt hierbei die erforderlichen Protokollumsetzungen zwischen den im paketorientierten und den im leitungsvermittelten Kommunikationsnetz verwendeten Signalisierungsund Übertragungsprotokollen durch.

Zum gegenwärtigen Zeitpunkt basieren paketorientierte Kommunikationsnetze zum Aufbau von Echtzeit-Kommunikationsverbindungen häufig auf der ITU-T-Empfehlung H.323 oder auf dem IETF-Standard SIP (Session Initiation Protocol). Ein solches Kommunikationssystem wird häufig auch als VoIP-System bezeichnet. Der Ausdruck VoIP sei im Folgenden außer auf die internetprotokollbasierte Sprachübertragung auch auf eine internetprotokollbasierte Übertragung davon verschiedener Medientypen wie Video, Fax, Daten und/oder Multimedia bezogen.

In einem VoIP-System registrieren sich die diesem zugehörigen Endgeräte und Gatewayeinrichtungen bei einer zentralen Signalisierungssteuerung des VoIP-Systems, um sich auf diese Weise dem VoIP-System bekannt zu machen. In VoIP-Systemen gemäß der H.323-Empfehlung wird eine solche Signalisierungssteuerung als Gatekeeper bezeichnet. Neben der Registrierung von Endgeräten und Gatewayeinrichtungen hat ein Gatekeeper unter anderem die Funktion, gerufene Zieladressen in internetprotokollbasierte Transportadressen aufzulösen.

Ein VoIP-System, das von einem oder mehreren logisch gekoppelten Gatekeepern verwaltet wird, wird häufig auch als VoIP-Domäne bezeichnet.

Gemäß der H.323-Empfehlung wird eine Gatewayeinrichtung von einem Gatekeeper wie ein VoIP-Endpunkt behandelt und ist wie andere VoIP-Endpunkte genau einem Gatekeeper durch Registrierung zugeordnet. Bei der Registrierung hinterlegt die Gatewayeinrichtung ihre Transportadresse bei dem ihr zugeordneten Gatekeeper, so dass der Gatekeeper gegebenenfalls eine Verbindungssignalisierung an die Gatewayeinrichtung weiterleiten kann.

TOGA J ET AL: "ITU-T standardization activities for interactive multimedia communications on packet-based networks: H.323 and related recommendations", COMPUTER NETWORKS, ELSEVIER SCIENCE PUBLISHERS B.V., AMSTERDAM, NL, Bd. 31, Nr. 3, 11. Februar 1999 (1999-02-11), Seiten 205-223, XP004304599, ISSN: 1389-1286, offenbart die Funktion des H.323 Standards, wobei der Standard H. 323 definiert ist in "Telecommunications and Internet Protocol Harmonization Over Networks (TIPHON); Signalling for basic calls and inter domain calls, between an H.323 Terminal and a Terminal in a Switched-Circuit Network (SCN), Phase II: Scenario 1 + Scenario 2; TS 101 322", ETSI STANDARDS, EUROPEAN TELECOMMUNICATIONS STANDARDS INSTITUTE, SOPHIA-ANTIPO, FR, Bd. TIPHON-3, Nr. V100, Juli 1999 (1999-07), XP014006046, ISSN: 0000-0001.

WO 99/14932 (A2) offenbart einen Gatekeeper, der mit einem Source-Gateway und mehreren von unabhängigen Betreibern betriebenen Destination-Gateways gekoppelt ist.

Aufgrund der Zuordnung einer Gatewayeinrichtung zu genau einem Gatekeeper werden zur Ankopplung mehrerer VoIP-Domänen an ein leitungsvermitteltes Kommunikationsnetz mehrere Gatewayeinrichtungen benötigt. Dies bedingt jedoch in der Regel einen erheblichen Hardwareaufwand.

Es ist Aufgabe der vorliegenden Erfindung ein Verfahren sowie Anordnungen zur Kommunikation, insbesondere Echtzeitkommunikation zwischen einem leitungsvermittelten Kommunikationsnetz und mehreren VoIP-Netzwerkdomänen anzugeben, das gegenüber dem Stand der Technik weniger aufwändig ist.

Gelöst wird diese Aufgabe durch ein Verfahren mit den Merkmalen des Patentanspruchs 1, durch eine Gatewayeinrichtung mit den Merkmalen des Patentanspruchs 4 sowie durch ein Kommunikationssystem mit den Merkmalen des Patentanspruchs 6.

Zur Kommunikation, insbesondere Echtzeitkommunikation zwischen einem leitungsvermittelten Kommunikationsnetz, z.B. einem öffentlichen oder privaten ISDN-Netz, und mindestens zwei, jeweils eine paketbasierte Signalisierungssteuerung aufweisenden VoIP-Netzwerkdomänen ist eine erfindungsgemäße Gatewayeinrichtung vorgesehen. Diese ist zwischen das leitungsvermittelte Kommunikationsnetz und die VoIP-Netzwerkdomänen geschaltet und übermittelt zu den Signalisierungssteuerungen jeweils eine Registrierungsanforderungsmeldung, so dass die Gatewayeinrichtung gleichzeitig in den mindestens zwei VoIP-Netzwerkdomänen als VoIP-Endpunkt registriert ist.

Durch die Registrierung der Gatewayeinrichtungen als VoIP-Endpunkt in den VoIP-Netzwerkdomänen können Kommunikationsverbindungen aus allen diesen VoIP-Netzwerkdomänen zur Gatewayeinrichtung und damit ins leitungsvermittelte Kommunikationsnetz weitervermittelt werden. Entsprechend können Kommunikationsverbindungen aus dem leitungsvermittelten Kommunikationsnetz durch die Gatewayeinrichtung in alle diese VoIP-Netzwerkdomänen weitergeleitet werden. Darüber hinaus kann die Gatewayeinrichtung auch als Übergangspunkt für Kommunikationsverbindungen zwischen verschiedenen dieser VoIP-Netzwerkdomänen dienen, ohne dass zwischen deren Signalisierungssteuerungen eine Kommunikationsbeziehung eingerichtet werden müsste.

Ein wesentlicher Vorteil der Erfindung besteht darin, dass durch die Mehrfachregistrierung der Gatewayeinrichtung an mehreren Signalisierungssteuerungen verschiedener VoIP-Netzwerkdomänen die Anzahl der zur Kommunikation zwischen einem leitungsvermittelten Kommunikationsnetz und mehren VoIP-Netzwerkdomänen benötigten Gatewayeinrichtungen reduziert werden kann. Insbesondere ist die Anzahl der benötigten Gatewayeinrichtungen nicht mehr notwendigerweise abhängig von der Anzahl der an das leitungsvermittelte Kommunikationsnetz anzukoppelnden VoIP-Netzwerkdomänen, sondern kann abhängig vom erwarteten Gesamtkommunikationsaufkommen dimensioniert werden. Durch die Verringerung der Anzahl der benötigten Gatewayeinrichtungen wird der erforderliche Hardware- sowie Administrationsaufwand erheblich reduziert.

Vorteilhafte Ausführungsformen und Weiterbildungen der Erfindung sind in den abhängigen Ansprüchen angegeben.

Nach einer vorteilhaften Ausführungsform der Erfindung können die Registrierungsanforderungsmeldungen zu den Signalisierungssteuerungen parallel übermittelt werden. Auf diese Weise kann die für die Registrierung erforderliche Zeitdauer beträchtlich verringert werden.

Weiterhin kann die Gatewayeinrichtung vor ihrer Registrierung eine Abfragemeldung in den VoIP-Netzwerkdomänen rundsenden, um so die Netzwerkadressen der Signalisierungssteuerungen zu ermitteln. Eine jeweilige Netzwerkadresse wird von der jeweiligen Signalisierungssteuerung bei Empfang der Abfragemeldung zur Gatewayeinrichtung übertragen. Die Gatewayeinrichtung kann anschließend die Registrierungsanforderungsmeldungen anhand der ermittelten Netzwerkadressen zu den Signalisierungssteuerungen übertragen. Ein Rundsenden einer Abfragemeldung in einer VoIP-Netzwerkdomäne wird gemäß der ITU-T-Empfehlung H.232 auch als "gatekeeper discovery" bezeichnet. Alternativ zu einer aktiven Abfrage der Netzwerkadressen bei den Signa-lisierungssteuerungen können deren Netzwerkadressen in der Gatewayeinrichtung vorkonfiguriert werden.

Weiterhin kann durch die registrierte Gatewayeinrichtung im Rahmen eines Verbindungsaufbaus aus dem leitungsvermittelten Kommunikationsnetz eine leitungsorientierte Verbindungsaufbaumeldung mit einer ein Kommunikationsziel identifizierenden Zieladressinformation empfangen werden. Die Zieladressinformation kann beispielsweise eine sogenannte Alias-Adresse, wie z.B. eine URL (Uniform Resource Locator), eine öffentliche oder private Telefonnummer oder eine Email-Aadresse sein. Infolge des Empfangs der Verbindungsaufbaumeldung kann die Gatewayeinrichtung jeweils eine Adressauflösungs-Anfragemeldung mit der empfangenen Zieladressinformation sequentiell oder parallel zu den Signalisierungssteuerungen übermitteln. Anschließend kann durch die Gatewayeinrichtung in diejenige VoIP-Netzwerkdomäne, deren Signalisierungssteuerung eine Adressauflösungsmeldung, die eine gelungene Adressauflösung der Zieladressinformation anzeigt, rückübermittelt, eine paketorientierte Verbindungsaufbaumeldung, z.B. gemäß der ITU-T-Empfehlung H.225.0 übertragen werden. Vorzugsweise kann mit der Adressauflösungsanfrage bei einer jeweiligen Signalisierungssteuerung eine Zulassungsprüfung hinsichtlich der Zulassung der Verbindung veranlasst werden.

Weiterhin kann durch die registrierte Gatewayeinrichtung eine aus dem leitungsvermittelten Kommunikationsnetz empfangene Zieladressinformation bewertet und abhängig von dieser Bewertung eine den weiteren Verbindungsaufbau betreffende Auswahl unter den VoIP-Netzwerkdomänen und/oder Signalisierungssteuerungen getroffen werden. Hierbei können z.B. für verschiedene VoIP-Netzwerkdomänen verschiedene vom rufenden Teilnehmer zu wählende Präfixe oder Vorwahlen vorgesehen sein. Die Bewertung kann anhand von in der Gatewayeinrichtung gespeicherten Nummern oder Adresstabellen erfolgen.

Ein Ausführungsbeispiel der Erfindung wird nachfolgend anhand der Zeichnung näher erläutert.

Dabei zeigen jeweils in schematischer Darstellung:
Figur 1 ein Kommunikationssystem mit einer zwischen ein leitungsvermitteltes Kommunikationsnetz und mehrere VoIP-Netzwerkdomänen geschalteten Gatewayeinrichtung,
Figur 2 die Gatewayeinrichtung in detaillierter Darstellung,
Figur 3 ein Ablaufdiagramm zur Veranschaulichung des Signalisierungsablaufs beim Registrieren der Gatewayeinrichtung und
Figur 4 ein Ablaufdiagramm zur Veranschaulichung des Signalisierungsablaufs beim Aufbau einer netzübergreifenden Verbindung.

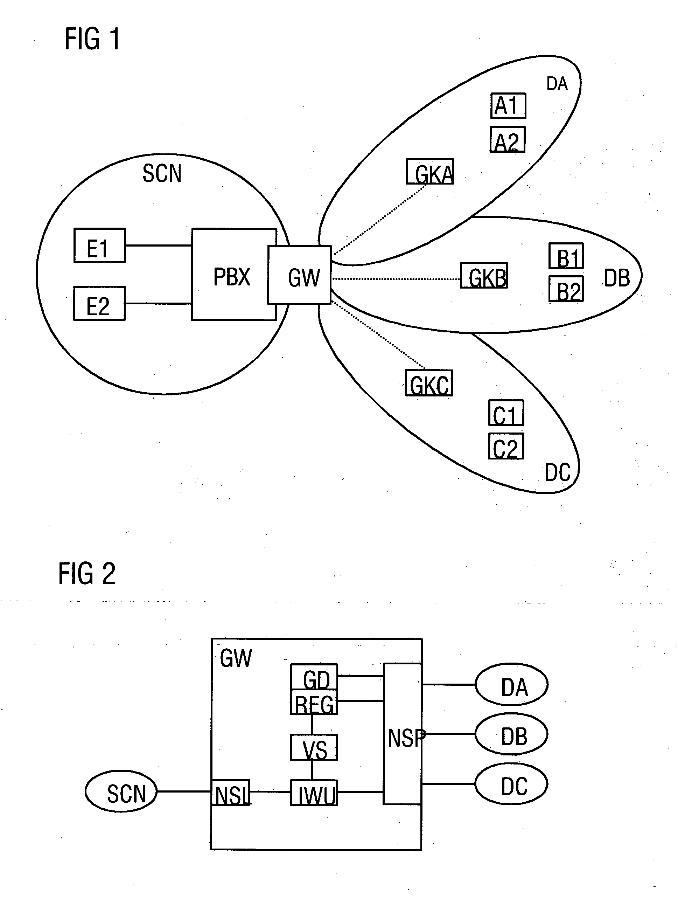

In **Figur 1** ist ein Kommunikationssystem schematisch dargestellt, bei dem ein leitungsvermitteltes Kommunikationsnetz SCN, z.B. ein ISDN-Netz, über eine Gatewayeinrichtung GW an mehrere VoIP-Netzwerkdomänen DA, DB und DC angekoppelt ist. Die VoIP-Netzwerkdomänen DA, DB und DC sind internetprotokollbasierte Kommunikationsnetze, wie beispielsweise lokale Netze (LAN) oder Weitverkehrsnetze (WAN), z.B. das Internet, oder logische Teilnetze derselben. In den VoIP-Netzwerkdomänen DA, DB und DC sind auf dem Internetprotokoll aufgesetzte Kommunikationsprotokolle zur verbindungsorientierten Kommunikation, z.B. zur Sprach-, Video-, Fax-, Daten- und/oder Multimediakommunikation implementiert. Für das vorliegende Ausführungsbeispiel sei angenommen, dass die VoIP-Netzwerkdomänen DA, DB und DC gemäß der ITU-T-Empfehlung H.323 eingerichtet sind. Alternativ dazu könnten die VoIP-Netzwerkdomänen DA, DB und DC auch gemäß dem IETF-Standard SIP (Session Initiation Protocol) implementiert sein.

Die Gatewayeinrichtung GW ist als Netzübergangseinrichtung zwischen das leitungsvermittelte Kommunikationsnetz SCN und die VoIP-Netzwerkdomänen DA, DB und DC geschaltet. Durch die Gatewayeinrichtung GW werden auf Seiten der VoIP-Netzwerkdomänen DA, DB und DC alle paketorientierten Internetprotokolle terminiert. Insbesondere stellt die Gatewayeinrichtung GW keinen sogenannten Proxy dar. Die Gatewayeinrichtung GW ist vorzugsweise durch einen Gateway gemäß der H.323-Empfehlung realisiert, der erfindungsgemäß derart umgestaltet ist, dass er gleichzeitig in mehreren VoIP-Netzwerkdomänen, hier DA, DB und DC registriert sein kann.

Das leitungsvermittelte Kommunikationsnetz SCN umfasst eine leitungsorientierte, z.B. TDM-basierte (TDM: Time Division Multiplex), Vermittlungseinrichtung PBX sowie leitungsorientierte Endgeräte E1 und E2, die an die Vermittlungseinrichtung PBX angeschlossen sind. Im folgenden Ausführungsbeispiel ist die Gatewayeinrichtung GW in die Vermittlungseinrichtung PBX integriert und dient zu deren Ankopplung an ein oder mehrere paketorientierte Kommunikationsnetze, hier die VoIP-Netzwerkdomänen DA, DB und DC. Eine derartige an ein paketorientiertes Kommunikationsnetz ankoppelbare Vermittlungseinrichtung wird häufig auch als IP-PBX bezeichnet. Die Vermittlungsreinrichtung PBX kommuniziert mit der Gatewayeinrichtung GW vorzugsweise über das sogenannte QSIG-Signalisierungsprotokoll, das häufig auch als "Unified International Corporate Network Signaling Standard" bezeichnet wird. Die Endgeräte E1 und E2 können beispielsweise Endgeräte zur Sprach-, Video-, Fax- oder Multimediakommunikation sein.

Die VoIP-Netzwerkdomänen DA, DB und DC weisen jeweils einen sogenannten Gatekeeper GKA, GKB bzw. GKC als zentrale Signalisierungs- und/oder Verbindungssteuerung gemäß der H.323-Empfehlung auf. Falls die VoIP-Netzwerkdomänen DA, DB und DC alternativ gemäß dem SIP-Standard realisiert wären, könnte anstelle eines jeweiligen Gatekeepers ein sogenannter SIP-Registrar oder SIP-Proxy als Signalisierungs- und/oder Verbindungssteuerung eingesetzt werden.

Die Gatekeeper GKA, GKB und GKC dienen unter anderem zur Adressauflösung in ihrer jeweiligen VoIP-Netzwerkdomäne, d.h. zum Umsetzen von gerufenen Zieladressen z.B. Alias-Adressen wie URLs, Telefonnummern oder Email-Adressen, in Transportadressen zum Datenpakettransport in der betreffenden VoIP-Netzwerkdomäne.

Eine jeweilige Signalisierung, z.B. gemäß der ITU-T-Empfehlung H.225.0 zwischen der Gatewayeinrichtung GW und den Gatekeepern GKA, GKB und GKC ist in Figur 1 durch punktierte Linien angedeutet.

Der von einem Gatekeeper verwaltete Bereich eines Netzwerks wird gemäß der H.323-Empfehlung als Zone bezeichnet. Eine VoIP-Netzwerkdomäne kann aus einer einzelnen Zone (single zone) oder aus mehreren Zonen (multi zone) bestehen. Im vorliegenden Ausführungsbeispiel bestehen die VoIP-Netzwerkdomänen DA, DB und DC jeweils aus einer einzelnen Zone, und werden somit jeweils zentral durch einen einzelnen, separaten Gatekeeper GKA, GKB bzw. GKC voneinander unabhängig verwaltet.

Weiterhin enthält die VoIP-Netzwerkdomäne DA Endeinrichtungen A1 und A2, die VoIP-Netzwerkdomäne DB Endeinrichtungen B1 und B2 und die VoIP-Netzwerkdomäne DC Endeinrichtungen C1 und C2. Die Endeinrichtungen A1, A2, B1, B2, C1 und C2 sind paketorientierte VoIP-Kommunikations-Endeinrichtungen, wie z.B. Endgeräte zur Sprach-, Video-, Fax-, Daten- und/oder Multimediakommunikation oder Personalcomputer oder darauf ablaufende Kommunikationsanwendungen oder Clients. Die Endeinrichtungen A1, A2, B1, B2, C1 und C2 sind jeweils als VoIP-Endpunkt bei dem für ihre VoIP-Netzwerkdomäne DA, DB bzw. DC zuständigen Gatekeeper GKA, GKB bzw. GKC registriert.

**Figur 2** zeigt die Gatewayeinrichtung GW in detaillierterer Darstellung. Die Gatewayeinrichtung GW verfügt über eine leitungsorientierte Schnittstelle NSL zum Anschluss an das leitungsvermittelte Kommunikationsnetz SCN sowie über paketorientierte Schnittstellen NSP zum Anschluss der VoIP-Netzwerkdomänen DA, DB und DC. Die Schnittstellen NSP sind vorzugsweise durch verschiedene internetprotokollbasierte Ports realisiert. Als weitere Funktionskomponenten enthält die Gatewayeinrichtung GW eine Umsetzeinrichtung IWU, eine Verbindungssteuerung VS, eine Abfrageeinrichtung GD sowie eine Registriereinrichtung REG.

Die Umsatzeinrichtung IWU dient zum Umsetzen zwischen im Kommunikationsnetz SCN verwendeten, leitungsorientierten Protokollen und in den VoIP-Netzwerkdomänen DA, DB und DC verwendeten, paketorientierten Protokollen und ist mit den Schnittstellen NSL und NSP gekoppelt.

Die Verbindungssteuerung VS dient unter anderem zum Weiterleiten von Verbindungen zwischen dem leitungsvermittelten Kommunikationsnetz SCN und den VoIP-Netzwerkdomänen DA, DB und DC sowie zwischen den VoIP-Netzwerkdomänen DA, DB und DC untereinander. Die Verbindungssteuerung VS ist mit der Umsetzeinrichtung IWU, der Registriereinrichtung REG sowie der Abfrageeinrichtung GD gekoppelt.

Die Abfrageeinrichtung GD ist mit den Schnittstellen NSP gekoppelt und dient zum Ermitteln von Transportadressen der zugänglichen Gatekeeper, hier GKA, GKB und GKC. Eine Transportadresse umfasst jeweils die Internetprotokolladresse des betreffenden Gatekeepers sowie die Portnummer des zu nutzenden Dienstes. Die Transportadressen werden ermittelt durch Rundsenden einer Abfragemeldung, z.B. einer sogenannten Gatekeeper-Request-Meldung (GRQ) gemäß der ITU-T-Empfehlung H.225.0, in allen VoIP-Netzwerkdomänen DA, DB und DC. Durch den Empfang der Abfragemeldung werden die Gatekeeper GKA, GKB und GKC dazu veranlasst, ihre Transportadresse zur abfragenden Gatewayeinrichtung GW zurückzusenden. Die Gatekeeper GKA, GKB und GKC sind damit in der Gatewayeinrichtung GW bekannt.

Die Registriereinrichtung REG ist ebenfalls an die Schnittstellen NSP gekoppelt und dient zum Registrieren der Gatewayeinrichtung GW bei allen dort bekannten Gatekeepern GKA, GKB und GKC und damit in allen bekannten VoIP-Netzwerkdomänen DA, DB und DC.

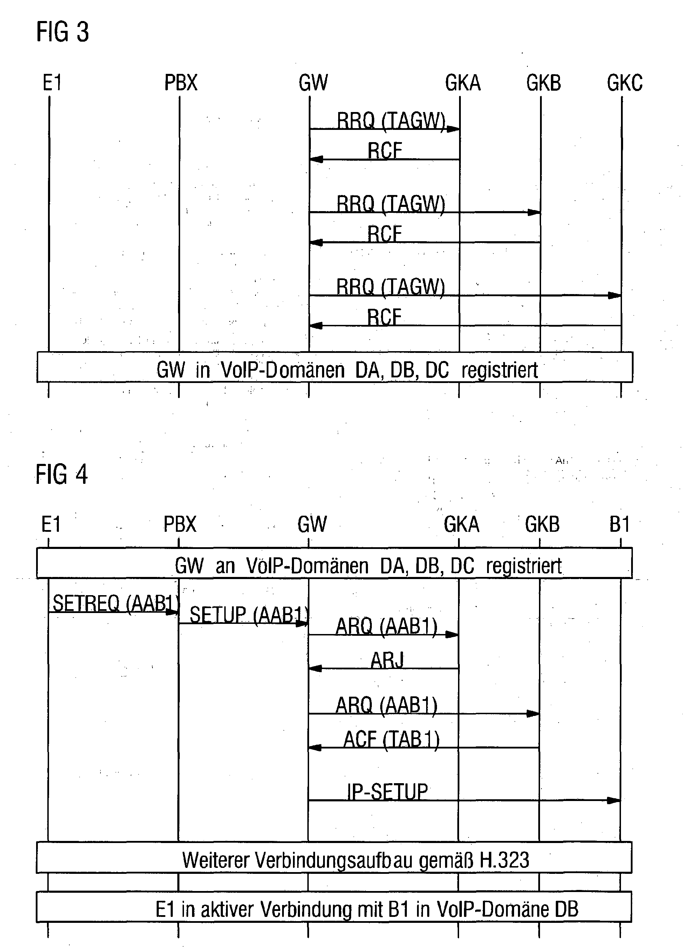

**Figur 3** zeigt ein Ablaufdiagramm zur Veranschaulichung des Signalisierungsablaufs beim Registrieren der Gatewayeinrichtung GW in den verschiedenen VoIP-Netzwerkdomänen DA, DB und DC. Zur Durchführung der Registrierung übermittelt die Registriereinrichtung REG über die Schnittstellen NSP Registrierungsanforderungsmeldungen RRQ, z.B. sogenannte Registration-Request-Meldungen gemäß der H.225.0-Empfehlung, parallel oder sequentiell an alle in der Gatewayeinrichtung GW bekannten Gatekeeper GKA, GKB und GKC. Die Übermittlung der Registrierungsanforderungsmeldungen RRQ erfolgt anhand der durch die Abfrageeinrichtung GD ermittelten Transportadressen der Gatekeeper GKA, GKB und GKC. Mit den Registrierungsanforderungsmeldungen RRQ wird jeweils eine Transportadresse TAGW der Gatewayeinrichtung GW, d.h. deren Internetprotokolladresse sowie die Portnummer des entsprechenden Dienstes, zu den Gatekeepern GKA, GKB und GKC übermittelt und dort hinterlegt. Gegebenenfalls können mit den Registrierungsanforderungsmeldungen RRQ noch betriebstechnische Informationen, wie z.B. die Anzahl verfügbarer Kommunikationskanäle zu den Gatekeepern GKA, GKB und GKC übermittelt werden. Anhand der jeweils hinterlegten Transportadresse TAGW können die Gatekeeper GKA, GKB und GKC netzübergreifende Verbindungen an bzw. über die Gatewayeinrichtung GW weiterleiten.

Nach Empfang einer jeweiligen Registrierungsanforderungsmeldung RRQ übermitteln die Gatekeeper GKA, GKB und GKC unabhängig voneinander jeweils eine Registrierungsbestätigungsmel dung RCF, z.B. eine Registration-Confirm-Meldung gemäß der H.225.0-Empfehlung, zu der Gatewayeinrichtung GW.

Durch die Übermittlung der Registrierungsanforderungsmeldungen RRQ registriert sich die Gatewayeinrichtung GW bei allen Gatekeepern GKA, GKB und GKC und damit in allen VoIP Netzwerkdomänen DA, DB und DC als VoIP-Endpunkt und insbesondere als VoIP-Gatewayendpunkt. Damit ist die Gatewayeinrichtung GW gleichzeitig in allen angeschlossenen VoIP-Domänen DA, DB und DC registriert und als VoIP-Gatewayendpunkt bekannt und kann als Netzübergangseinrichtung für Verbindungen zwischen Endgeräten E1 und E2 des leitungsvermittelten Kommunikationsnetzes SCN und Endeinrichtungen A1, A2, B1, B2, C1 und C2 sämtlicher VoIP-Netzwerkdomänen DA, DB und DC genutzt werden. Hierzu ist gegenüber dem bekannten Stand der Technik anstelle von drei domänenspezifischen Gateways nur eine einzige Gatewayeinrichtung GW erforderlich.

**Figur 4** zeigt schließlich ein Ablaufdiagramm zur Veranschaulichung des Signalisierungsablaufs beim Aufbau einer netzübergreifenden Verbindung vom Endgerät E1 zur Endeinrichtung B1. Das Endgerät E1 veranlasst den Aufbau der Verbindung durch Übermittlung einer Verbindungsanforderungsmeldung SETREQ zur Vermittlungseinrichtung PBX. Die Verbindungsanforderungsmeldung SETREQ enthält als Zieladressinformation eine die Zielendeinrichtung B1 identifizierende Alias-Adresse AAB1. Die Alias-Adresse AAB1 kann beispielsweise eine URL (Uniform Resource Locator), eine E.164- oder PNP-Telefonnummer (PNP: Private Numbering Plan) oder eine Email-Adresse sein. Infolge des Empfangs der Verbindungsanforderungsmeldung SETREQ sendet die Vermittlungseinrichtung PPX eine leitungsorientierte Verbindungsaufbaumeldung SETUP, z.B. eine Setup-Meldung gemäß dem QSIG-Protokoll, mit der Alias-Adresse AAB1 zur Gatewayeinrichtung GW.

Die Verbindungssteuerung VS empfängt die Verbindungsaufbaumeldung SETUP und übermittelt daraufhin eine Zulassungsanfra gemeldung ARQ, z.B. eine sogenannte Admission-Request-Meldung gemäß der H.225.0-Empfehlung, mit der Alias-Adresse AAB1 zum Gatekeeper GKA. Durch die Zulassungsanfragemeldung ARQ wird beim empfangenden Gatekeeper angefragt, ob er die aufzubauende Verbindung zulässt. Darüber hinaus fungiert die Zulassungsanfragemeldung ARQ auch als Adressauflösungs-Anfragemeldung für die Auflösung der Alias-Adresse AAB1.

Im vorliegenden Ausführungsbeispiel ist die Zieladresse AAB1 in der VoIP-Netzwerkdomäne DA nicht bekannt, infolgedessen der Gatekeeper GKA eine Zurückweisungsmeldung ARJ, z.B. eine sogenannte Admission-Reject-Meldung gemäß der H.225.0-Empfehlung, zur Gatewayeinrichtung GW rückübermittelt. Die Gatewayeinrichtung GW wiederholt daraufhin die Zulassungsanfrage bei den anderen bekannten Gatekeepern so lange bis ein Gatekeeper die Zieladressinformation AAB1 auflösen kann.

Im vorliegenden Ausführungsbeispiel wird eine weitere Zulassungsanfragemeldung ARQ mit der Alias-Adresse AAB1 noch zum Gatekeeper GKB übermittelt. Da die Endeinrichtung B1 der VoIP-Zone des Gatekeepers GKB angehört und diesem bekannt ist, kann der Gatekeeper GKB die Alias-Adresse AAB1 in eine Transportadresse TAB1 für die VoIP-Netzwerkdomäne DB auflösen. Die Transportadresse TAB1 umfasst die Internetprotokolladresse (IP-Adresse) derjenigen Einrichtung in der VoIP-Netzwerkdomäne DB, an die im Rahmen des weiteren Verbindungsaufbaus eine paketorientierte Verbindungsaufbaumeldung IP-SETUP durch die Gatewayeinrichtung GW zu übermitteln ist. Diese Einrichtung kann im sogenannten "Direct Routed Model" die Zielendeinrichtung B1 und im sogenannten "Gatekeeper Routed Model" der Gatekeeper GKB sein. Im "Gatekeeper Routed Model" leitet der Gatekeeper GKB die paketorientierte Verbindungsaufbaumeldung IP-SETUP an die Zielendeinrichtung B1 weiter.

Im vorliegenden Ausführungsbeispiel wird das "Direct Routed Model" verwendet. Dementsprechend umfasst die Transportadres se TAB1 die Internetprotokolladresse der Endeinrichtung B1. Weiterhin umfasst die Transportadresse TAB1 eine Portnummer des betreffenden Kommunikationsdienstes.

Nach der erfolgreichen Adressauflösung übermittelt der Gatekeeper GKB eine Zulassungsbestätigungsmeldung ACF, z.B. eine sogenannte Admission-Confirm-Meldung gemäß der H.225.0-Empfehlung, mit der Transportadresse TAB1 zur Gatewayeinrichtung GW. Deren Verbindungssteuerung VS sendet infolgedessen die paketorientierte Verbindungsaufbaumeldung IP-SETUP, z.B. eine Setup-Meldung gemäß der H.225.0-Empfehlung, zur durch die Transportadresse TAB1 identifizierten Endeinrichtung B1.

Der weitere Verbindungsaufbau zwischen dem Endgerät E1 und der Endeinrichtung B1 erfolgt seitens der VoIP-Netzwerkdomäne DB gemäß der H.323-Empfehlung und seitens des leitungsvermittelten Kommunikationsnetzes SCN gemäß dem QSIG-Standard, wobei die Gatewayeinrichtung GW als Netzübergangseinrichtung fungiert.

Da im vorliegenden Ausführungsbeispiel der Gatekeeper GKB die Alias-Adresse AAB1 bereits auflösen kann, wird keine weitere Zulassungsanfragemeldung ARQ an den Gatekeeper GKC übermittelt.

Alternativ zu einer sequentiellen Übertragung von Zulassungsanfragemeldungen ARQ können diese parallel an alle in der Gatewayeinrichtung GW bekannten Gatekeeper GKA, GKB und GKC übermittelt werden. In diesem Fall kann die Gatewayeinrichtung GW bis zum Eintreffen einer Zulassungsbestätigungsmeldung ACF von einem der Gatekeeper warten und anschließend die Verbindungsaufbaumeldung IP-SETUP zu diesem Gatekeeper übermitteln.

Nach einer Erfindungsvariante kann die Gatewayeinrichtung GW die empfangene Alias-Adresse AAB1 zunächst bewerten und abhängig davon die Zulassungsanfragemeldung ARQ zu einem der Gatekeeper GKA, GKB bzw. GKC übermitteln. Als Bewertungskriterium können hierbei z.B. am Endgerät E1 gewählte Präfixe oder Vorwahlen, die eine der VoIP-Netzwerkdomänen DA, DB bzw. DC identifizieren, genutzt werden.

Außer für die Kommunikation zwischen dem leitungsvermittelten Kommunikationsnetz SCN und den paketorientierten VoIP-Netzwerkdomänen DA, DB und DC kann die Gatewayeinrichtung GW auch für Verbindungen zwischen den VoIP-Netzwerkdomänen DA, DB und DC untereinander, d.h. beipielsweise für Verbindungen zwischen den Endeinrichtungen A1 und B1, verwendet werden. Dies ist insbesondere dann vorteilhaft, wenn die VoIP-Netzwerkdomänen DA und DB keinen direkten Datenpaketaustausch erlauben. In diesem Fall kann eine Verbindung von der VoIP-Netzwerkdomäne DA über die Gatewayeinrichtung GW und die Vermittlungseinrichtung PBX zur VoIP-Netzwerkdomäne DB geführt werden.

## Patentansprüche

1. Verfahren zur Kommunikation zwischen einem leitungsvermittelten Kommunikationsnetz (SCN) und mindestens zwei, jeweils eine paketbasierte Signalisierungssteuerung (GKA, GKB, GKC) aufweisenden VoIP-Netzwerkdomänen (DA, DB, DC), wobei eine zwischen das leitungsvermittelte Kommunikationsnetz (SCN) und die VoIP-Netzwerkdomänen (DA, DB, DC) geschaltete Gatewayeinrichtung (GW) mit einer Abfrageeinrichtung (GD) zu den Signalisierungssteuerungen (GKA, GKB, GKC) jeweils eine Registrierungsanforderungsmeldung (RRQ) übermittelt, wobei
a) die eine Gatewayeinrichtung (GW) über eine leitungsorientierte Schnittstelle (NSL) zum Anschluss an das leitungsvermittelte Kommunikationsnetz (SCN) sowie über paketorientierte Schnittstellen (NSP) zum Anschluss der VoIP-Netzwerkdomänen (DA, DB, DC) verfügt,
b) wobei die paketorientierten Schnittstellen (NSP) durch verschiedene internetprotokollbasierte Ports realisiert sind,
c) wobei die Abfrageeinrichtung (GD) mit den paketorientierten Schnittstellen (NSP) gekoppelt ist und Transportadressen der zugänglichen Signalisierungssteuerungen (GKA, GKB, GKC), wobei jede Transportadresse die Internetproto- ermittelt kolladresse der betreffenden Signalisierungssteuerung sowie die Portnummer des zu nutzenden Dienstes umfasst,
d) wobei die eine Gatewayeinrichtung (GW) durch einen Gateway
- entweder gemäß der H.323-Empfehlung
- oder alternativ gemäß dem SIP-Standard realisiert ist, der derart umgestaltet ist, dass die Gatewayeinrichtung (GW) gleichzeitig in den mindestens zwei VoIP-Netzwerkdomänen (DA, DB, DC) als VoIP-Endpunkt registriert ist,
e) wobei die eine registrierte Gatewayeinrichtung (GW)
e1) aus dem leitungsvermittelten Kommunikationsnetz (SCN) eine leitungsorientierte Verbindungsaufbaumeldung (SETUP) mit einer ein Kommunikationsziel (B1) identifizierenden Zieladressinformation (AAB1) empfängt,
e2) die empfangene Zieladressinformation (AAB1) bewertet und
e3) abhängig davon eine den weiteren Verbindungsaufbau betreffende Auswahl unter den VoIP-Netzwerkdomänen (DA, DB, DC) und/oder den Signalisierungssteuerungen (GKA, GKB, GKC) trifft.

2. Verfahren nach Anspruch 1,
**dadurch gekennzeichnet,**
**dass** die Registrierungsanforderungsmeldungen (RRQ) zu den Signalisierungssteuerungen (GKA, GKB, GKC) parallel übermittelt werden.

3. Verfahren nach Anspruch 1 oder 2,
**dadurch gekennzeichnet,**
**dass** die Gatewayeinrichtung (GW) eine jeweilige Netzwerkadresse der Signalisierungssteuerungen (GKA, GKB, GKC) durch Rundsenden einer Abfragemeldung in den VoIP-Netzwerkdomänen (DA, DB, DC) ermittelt und die Registrierungsanforderungsmeldungen (RRQ) anhand der ermittelten Netzwerkadressen überträgt.

4. Gatewayeinrichtung (GW) zur Kommunikation zwischen einem leitungsvermittelten Kommunikationsnetz (SCN) und mindestens zwei, jeweils eine paketbasierte Signalisierungssteuerung (GKA, GKB, GKC) aufweisenden VoIP-Netzwerkdomänen (DA, DB, DC), mit
- Schnittstellen (NSL, NSP) zum Ankoppeln des leitungsvermittelten Kommunikationsnetzes (SCN) sowie der VoIP-Netzwerkdomänen (DA, DB, DC),
- einer Abfrageeinrichtung (GD),
- einer Umsetzeinrichtung,
- einer Verbindungssteuerung und
- einer Registriereinrichtung (REG),wobei
a_{0'}) die Registriereinrichtung (REG) dazu ausgestaltet ist, zu den Signalisierungssteuerungen (GKA, GKB, GKC) eine Registrierungsanforderungsmeldung (RRQ) zu übermitteln, so dass die Gatewayeinrichtung (GW) gleichzeitig in den mindestens zwei VoIP-Netzwerkdomänen (DA, DB, DC) als VoIP-Endpunkt registiert ist,
a') die Gatewayeinrichtung (GW) über eine leitungsorientierte Schnittstelle (NSL) zum Anschluss an das leitungsvermittelte Kommunikationsnetz (SCN) sowie über paketorientierte Schnittstellen (NSP) zum Anschluss der VoIP-Netzwerkdomänen (DA, DB, DC) verfügt,
b') wobei die paketorientierten Schnittstellen (NSP) durch verschiedene internetprotokollbasierte Ports realisiert sind,
c') wobei die Abfrageeinrichtung (GD) mit den paketorientierten Schnittstellen (NSP) gekoppelt ist und zum Ermitteln von Transportadressen der zugänglichen Signalisierungssteuerungen (GKA, GKB, GKC) dient, wobei jede Transportadresse die Internetprotokolladresse der betreffenden Signalisierungssteuerung sowie die Portnummer des zu nutzenden Dienste umfasst,
d') wobei die Gatewayeinrichtung (GW) durch einen Gateway
- entweder gemäß der H.323-Empfehlung
- oder alternativ gemäß dem SIP-Standard realisiert ist, der derart umgestaltet ist, dass die Gatewayeinrichtung (GW) gleichzeitig in den mindestens zwei VoIP-Netzwerkdomänen (DA, DB, DC) als VoIP-Endpunkt registriert ist,
e') wobei die Verbindungssteuerung (VS) mit der Umsetzeinrichtung (IWU), der Registriereinheit (REG) und der Abfrageeinrichtung (GD) gekoppelt ist und ausgestaltet ist
e'1) zum Empfangen einer leitungsorientierten Verbindungsaufbaumeldung (SETUP) mit einer ein Kommunikationsziel (B1) identifizierenden Zieladressinformation (AAB1) aus dem leitungsvermittelten Kommunikationsnetz (SCN),
e'2) zum Bewerten der empfangenen Zieladressinformation (AAB1) und
e'3) zum Treffen einer von der Bewertung abhängigen, den weiteren Verbindungsaufbau betreffenden Auswahl unter den VoIP-Netzwerkdomänen (DA, DB, DC) und/oder Signalisierungssteuerungen (GKA, GKB, GKC).

5. Gatewayeinrichtung nach Anspruch 4,
**gekennzeichnet dadurch, dass**
die Abfrageeinrichtung (GD) zum Rundsenden einer Abfragemeldung in den VoIP-Netzwerkdomänen (DA, DB, DC) zum Ermitteln von für die Übertragung der Registrierungsanforderungsmeldungen (RRQ) zu verwendenden Netzwerkadressen der Signalisierungssteuerungen (GKA, GKB, GKC) ausgestaltet ist.

6. Kommunikationssystem mit einer zwischen ein leitungsvermitteltes Kommunikationsnetz (SCN) und mindestens zwei VoIP-Netzwerkdomänen (DA, DB, DC) geschalteten Gatewayeinrichtung (GW) nach einem der Ansprüche 4 oder 5, die gleichzeitig in den mindestens zwei VoIP-Netzwerkdomänen (DA, DB, DC) als VoIP-Endpunkt registriert ist.

## Claims

1. Method for communication between a switched circuit communication network (SCN) and at least two VoIP network domains (DA, DB, DC) each comprising a packet-based signaling controller (GKA, GKB, GKC), wherein a gateway device (GW) connected between the switched circuit communication network (SCN) and the VoIP network domains (DA, DB, DC) transmits in each case a registration request message (RRQ) by means of a query device (GD) to the signaling controllers (GKA, GKB, GKC), wherein
a) the one gateway device (GW) has a connection-oriented interface (NSL) for the connection to the switched circuit communication network (SCN) as well as packet-oriented interfaces (NSP) for the connection of the VoIP network domains (DA, DB, DC),
b) wherein the packet-oriented interfaces (NSP) are implemented by different Internet protocol-based ports,
c) wherein the query device (GD) is coupled to the packet-oriented interfaces (NSP) and determines transport addresses of the accessible signaling controllers (GKA, GKB, GKC), wherein each transport address comprises the Internet protocol address of the signaling controller in question as well as the port number of the service to be used,
d) wherein the one gateway device (GW) is implemented by means of a gateway
- either according to the H. 323 recommendation
- or alternatively according to the SIP standard,
which is reconfigured in such a manner that the gateway device (GW) is registered simultaneously in the at least two VoIP network domains (DA, DB, DC) as VoIP end point,
e) wherein the one registered gateway device (GW)
e1) receives, from the switched circuit communication network (SCN), a connection-oriented connection setup message (SETUP) with target address information (AAB1) identifying a communication target (B1),
e2) evaluates the received target address information (AAB1)
and
e3) depending on the evaluation, makes a selection relating to the further connection setup from the VoIP network domains (DA, DB, DC) and/or the signaling controllers (GKA, GKB, GKC).

2. Method according to Claim 1,
**characterized in**
**that** the registration request messages (RRQ) are transmitted in parallel to the signaling controllers (GKA, GKB, GKC).

3. Method according to Claim 1 or 2,
**characterized in**
**that** the gateway device (GW) determines a respective network address of the signaling controllers (GKA, GKB, GKC) by sending around a query message in the VoIP network domains (DA, DB, DC), and it transmits the registration request messages (RRQ) on the basis of the network addresses determined.

4. Gateway device (GW) for communication between a switched circuit communication network (SCN) and at least two VoIP network domains (DA, DB, DC) each comprising a packet-based signaling controller (GKA, GKB, GKC), with
- interfaces (NSL, NSP) for coupling the switched circuit communication network (SCN) and the VoIP network domains (DA, DB, DC),
- a query device (GD), a conversion device, a connection controller and
- a registration device (REG),
wherein
a_{0'}) the registration device (REG) is designed so as to transmit a registration request message (RRQ) to the signaling controllers (GKA, GKB, GKC), so that the gateway device (GW) is registered simultaneously in the at least two VoIP network domains (DA, DB, DC) as VoIP end point,
a') the gateway device (GW) has a connection-oriented interface (NSL) for the connection to the switched circuit communication network (SCN) as well as packet-oriented interfaces (NSP) for the connection of the VoIP network domains (DA, DB, DC),
b') wherein the packet-oriented interfaces (NSP) are implemented by different Internet protocol-based ports,
c') wherein the query device (GD) is coupled to the packet-oriented interfaces (NSP) and used for determining transport addresses of the accessible signaling controllers (GKA, GKB, GKC), wherein each transport address comprises the Internet protocol address of the signaling controller in question as well as the port number of the service to be used,
d') wherein the gateway device (GW) is implemented by means of a gateway
- either according to the H. 323 recommendation
- or alternatively according to the SIP standard,
which is reconfigured in such a manner that the gateway device (GW) is registered simultaneously in the at least two VoIP network domains (DA, DB, DC) as VoIP end point,
e') wherein the connection controller (VS) is coupled to the conversion device (IWU), to the registration unit (REG) and to the query device (GD), and is designed
e'1) for receiving a connection-oriented connection setup message (SETUP) with target address information (AAB1) identifying a communication target (B1) from the switched circuit communication network (SCN),
e'2) for evaluating the received target address information (AAB1) and
e'3) for making a selection which depends on the evaluation and relates to the further connection setup, from the VoIP network domains (DA, DB, DC) and/or signaling controllers (GKA, GKB, GKC).

5. Gateway device according to Claim 4,
**characterized in that**
the query device (GD) is designed for sending around a query message in the VoIP network domains (DA, DB, DC) for the determination of network addresses of the signaling controllers (GKA, GKB, GKC), which are to be used for the transmission of the registration request messages (RRQ).

6. Communication system with a gateway device (GW) connected between a switched circuit communication network (SCN) and at least two VoIP network domains (DA, DB, DC), according to Claim 4 or 5, which is registered simultaneously in the at least two VoIP network domains (DA, DB, DC) as VoIP end point.

## Revendications

1. Méthode de communication entre un réseau de communication à commutation de circuits (SCN) et au moins deux domaines de réseau VoIP (DA, DB, DC), comprenant chacun un contrôleur de signalisation à base de paquets (GKA, GKB, GKC), dans lequel un dispositif de passerelle (GW), connecté entre le réseau de communication à commutation de circuits (SCN) et les domaines de réseau VoIP (DA, DB, DC) transmet, dans chaque cas, un message de demande d'enregistrement (RRQ) au moyen d'un dispositif de requête (GD) aux contrôleurs de signalisation (GKA, GKB, GKC) dans laquelle
a) le dispositif de passerelle (GW) dispose d'une interface orientée connexion (NSL) pour la connexion au réseau de communication à commutation de circuits (SCN), ainsi que des interfaces orientées paquets (NSP) pour la connexion des domaines de réseau VoIP (DA, DB, DC),
b) dans laquelle les interfaces orientées paquets (NSP) sont mises en oeuvre par différents ports basés sur le protocole Internet,
c) dans laquelle le dispositif de requête (GD) est couplé aux interfaces orientées paquets (NSP) et détermine les adresses de transport des contrôleurs de signalisation accessibles (GKA, GKB, GKC), dans laquelle chaque adresse de transport comporte l'adresse de protocole Internet du contrôleur de signalisation en question, ainsi que le numéro de port du service à utiliser,
d) dans laquelle un dispositif de passerelle (GW) est mis en oeuvre au moyen d'une passerelle
- soit selon la recommandation H.323
- soit selon le standard SIP,
qui est reconfigurée de telle manière que le dispositif de passerelle (GW) est enregistré simultanément dans les au moins deux domaines de réseau VoIP (DA, DB, DC) en tant que point de terminaison VoIP,
e) dans laquelle le dispositif de passerelle enregistré (GW)
e1) reçoit, du réseau de communication à commutation de circuits (SCN), un message de configuration de connexion orienté connexion (SETUP) avec les informations d'adresse cible (AAB1) qui identifient une cible de communication (B1),
e2) évalue les informations d'adresse cible reçues (AAB1)
et
e3) selon l'évaluation, procède à une sélection en rapport avec la configuration de connexion ultérieure des domaines de réseau VoIP (DA, DB, DC) et/ou contrôleurs de signalisation (GKA, GKB, GKC).

2. Une méthode selon la revendication 1,
**caractérisée en ce que**
les messages de demande d'enregistrement (RRQ) sont transmis en parallèle aux contrôleurs de signalisation (GKA, GKB, GKC).

3. Une méthode selon la revendication 1 ou 2,
**caractérisée en ce que**
le dispositif de passerelle (GW) détermine une adresse réseau correspondante des contrôleurs de signalisation (GKA, GKB, GKC) en envoyant un message de requête dans les domaines de réseau VoIP (DA, DB, DC) et transmet les messages de demande d'enregistrement (RRQ) sur la base des adresses réseau déterminées.

4. Un dispositif de passerelle (GW) pour la communication entre un réseau de communication à commutation de circuits (SCN) et au moins deux domaines de réseau VoIP (DA, DB, DC) comprenant chacun un contrôleur de signalisation à base de paquets (GKA, GKB, GKC) avec
- des interfaces (NSL, NSP) pour coupler le réseau de communication à commutation de circuits (SCN) et les domaines de réseau VoIP (DA, DB, DC),
- un dispositif de requête (GD), un dispositif de conversion, un contrôleur de connexion et
- un dispositif d'enregistrement (REG),
dans lequel
a_{0'}) le dispositif d'enregistrement (REG) est conçu de manière à transmettre un message de demande d'enregistrement (RRG) aux contrôleurs de signalisation (GKA, GKB, GKC), de sorte que le dispositif de passerelle (GW) est enregistré simultanément dans les au moins deux domaines de réseau VoIP (DA, DB, DC) en tant que point de terminaison VoIP,
a') le dispositif de passerelle (GW) dispose d'une interface orientée connexion (NSL) pour la connexion au réseau de communication à commutation de circuits (SCN), ainsi que des interfaces orientées connexion (NSP) pour la connexion des domaines de réseau VoIP (DA, DB, DC),
b') dans lequel les interfaces orientées paquets (NSP) sont mises en oeuvre par différents ports basés sur le protocole Internet,
c') dans lequel le dispositif de requête (GD) est couplé aux interfaces orientées paquets (NSP) et il est utilisé pour déterminer les adresses de transport des contrôleurs de signalisation accessibles (GKA, GKB, GKC), dans lequel chaque adresse de transport comporte l'adresse protocole Internet du contrôleur de signalisation en question, ainsi que le numéro de port du service à utiliser,
d') dans lequel un dispositif de passerelle (GW) est mis en oeuvre au moyen d'une passerelle
- soit selon la recommandation H.323
- soit selon le standard SIP,
qui est reconfiguré de telle manière que le dispositif de passerelle (GW) est enregistré simultanément dans les au moins deux domaines de réseau VoIP (DA, DB, DC) en tant que point de terminaison VoIP,
e') dans lequel le contrôleur de connexion (VS) est couplé au dispositif de conversion (IWU), au dispositif d'enregistrement (REG) et au dispositif de requête (GD) et est conçu
e'1) pour recevoir un message de configuration de connexion orienté connexion (SETUP) avec les informations d'adresse cible (AAB1) qui identifient une cible de communication (B1) à partir du réseau de communication à commutation de circuits (SCN),
e'2) pour évaluer les informations d'adresse cible reçues (AAB1) et
e'3) pour procéder à une sélection qui dépend de l'évaluation et en rapport avec la configuration de connexion ultérieure, des domaines de réseau VoIP (DA, DB, DC) et/ou contrôleurs de signalisation (GKA, GKB, GKC).

5. Un dispositif de passerelle selon la revendication 4,
**caractérisé en ce que**
le dispositif de requête (GD) est conçu pour envoyer un message de requête dans les domaines de réseau VoIP (DA, DB, DC) pour la détermination des adresses réseau des contrôleurs de signalisation (GKA, GKB, GKC), qui doivent être utilisés pour la transmission des messages de demande d'enregistrement (RRQ).

6. Un système de communication avec un dispositif de passerelle (GW) connecté entre un réseau de communication à commutation de circuits (SCN) et au moins deux domaines de réseau VoIP (DA, DB, DC), selon la revendication 4 ou 5, qui est enregistré simultanément dans les deux, au moins, domaines de réseau VoIP (DA, DB, DC) en tant que point de terminaison VoIP.
